Europäisches Patentamt

European Patent Office

Office européen des brevets

(19)

(11) Publication number: **0 194 004**
**A2**

(12)

# EUROPEAN PATENT APPLICATION

(21) Application number: **86300157.4**

(22) Date of filing: **13.01.86**

(51) Int. Cl.⁴: **H04M 3/42** , H04Q 3/62 , G10L 5/00

(30) Priority: **29.01.85 GB 8502228**

(43) Date of publication of application:
**10.09.86 Bulletin 86/37**

(84) Designated Contracting States:
**BE DE FR IT LU NL SE**

(71) Applicant: **PLESSEY OVERSEAS LIMITED**
**Vicarage Lane**
**Ilford Essex IGI 4AQ(GB)**

(72) Inventor: **Kellett, Neil**
**268 Bennett Street**
**Long Eaton Nottinghamshire(GB)**

(74) Representative: **Sorenti, Gino**
**Intellectual Property Department The Plessey**
**Company plc 2-60 Vicarage Lane**
**Ilford Essex IG1 4AQ(GB)**

(54) **Voice synthesis module.**

(57) With the increasing complexity of facilities offered by a modern private automatic branch exchange PABX, there is a corresponding increase in the need to supply meaningful feedback to the user. There are four main areas where information is required.

(i) Supplementation of failure tones,

(ii) Indication of facility activation,

(iii) Indication of routing,

(iv) Provision of ancillary information.

Currently the majority of the above situations are handled by the provision of selected tones. In the case of call failure, two tones are used to indicate in excess of one hundred different cases of failure during call-up or facility activation.

The invention utilises voice response messages to inform the user of a particular condition. The messages may supplement various tones. The voice synthesis module includes a number of speech synthesis channels and a speech data library. The module receives a channel number and phrase number from software, which are read by a CPU during its scanning routine and starts the required synthesiser 'speaking'.

Fig. 1

# VOICE SYNTHESIS MODULE

The present invention relates to a voice synthesis module for use in a telecommunications exchange.

Speech reproduction techniques and methods have been available for a long time. However, mechanical tape and disk drives using analogue recordings are expensive, bulky, power consuming and failure prone. Additionally, they can play back sequentially only. Digital methods of coding speech tend to be cheaper than their analogue counterparts but do suffer from high memory requirements. For example, pulse code modulation (PCM) techniques usually sample speech data at 8KHz, corresponding to a 4KHz bandwidth. Quantizing each of these samples in 8 bits results in a data rate of 64K bits per second. This data rate makes digital coding of large vocabularies impractical. Digital coding methods are sometimes called waveform synthesis, but they are not true synthesis methods as they simply reconstitute the original waveform from the stored coded speech data. True synthesis techniques generate a speech waveform, using parametric data, which does not resemble the original speech waveform even though the original and synthesized waveforms are perceived by the ear as being nearly the same.

There are, basically two different types of speech synthesis, time domain synthesis and frequency domain synthesis. Time domain synthesis uses compressed representations of the speech waveform as a function of time as the speech memory data. The synthesizer simply unpacks these stored waveforms to produce a speech output signal. This method does not simply aim to reduce the number of bits required to store the original speech waveform and then try to approximate that waveform, but attempts to produce a synthetic speech waveform represented by a small number of bits which sounds like but does not necessarily look like the original waveform. The hardware implementation of this method is fairly simple, the difficult area being the analysis which allows the speech waveform to be stored in such a highly compressed form.

Frequency domain synthesis is based on human vocal tract modelling. The speech waveform is stored as parametric data representing the vocal fold oscillation and the vocal tract resonances. Complex integrated circuits transform these frequency domain parameters into a time domain audio signal approximating the original speech waveform spectrum.

Various speech synthesis methods based on both time domain and frequency domain synthesis are available and used in speech synthesis integrated circuits. These methods can generally be described as either constructive methods or analysis/synthesis methods. Constructive synthesis generates speech output from a prescribed set of linguistic sound segments under the guidance of a set of rules. Using such a set of rules, the linguistic elements for example, phonemes can be concatenated into any word. No raw human speech waveform is required using these methods. Such a method can also be termed 'synthesis by rule'.

Analysis/synthesis methods derive their vocabularies from an actual human speech waveform. The vocabulary can be in the form of words, phrases or complete sentences, therefore the derived synthetic speech resembles more closely the original speech in inflection, intonation, intelligibility and quality. Analysis/synthesis analyses an actual spoken word or phrase to generate coded parameters representing the speech waveform. These parameters can be stored for later use and/or synthesized immediately to control a speech synthesizer chip. Much more storage is required for these methods than for constructive synthesis.

There are four basic speech synthesis methods used in speech synthesis integrated circuits. These are phoneme synthesis, formant synthesis, waveform digitisation, linear predictive coding.

Phoneme synthesizers are devices capable of generating and concatenating phonemes, the basic units of speech. The overall bit rate for phoneme synthesizers can be very low, around 100 bits per second, since the number of phonemes in most languages is around 40 to 100. Phoneme synthesizers emphasize 'alphabet' simplicity over speech quality. The basic phoneme sounds vary slightly as they occur in different words. Words fashioned from so few basic sounds have a mechanical or 'robotic' quality. Speech quality can be improved by modifying the phonemes with allophones, at the expense of memory space. The basic 44 phonemes in English can be expanded into 128 allophones which require approximately 3K bytes of memory and a further 7K bytes is required for the rules used to string the allophones together. Allophonic speech still sounds unnatural but the rule sets are constantly being refined to improve the speech quality. Pitch contours can be superimposed on the allophone concatenation to make the speech more pleasing to the ear. This may, however, lower the intelligibility of the speech if applied incorrectly and is a difficult process to apply algorithmically. An allophonic synthesizer offers a compromise between size of vocabulary, memory requirements, speech quality, versatility and flexibility. Furthermore, allophonic synthesizers are inherently suitable for text-to-speech systems. Input text from a keyboard, is converted automatically into the appropriate allophones which are then used to generate speech.

The aim of Formant synthesizers is to electronically model the sound forming features of the vocal tract. Most formant synthesizers use three formant filters for voiced sounds and one formant filter for fricative sounds. A nasal formant filter may or may not be included but no dynamic formant function is usually associated with it. Two driving functions, an impulse source for voiced sounds and a noise source for unvoiced sounds, are used. These driving signals are filtered into specific frequency bands or formants by the time varying formant filters. The bandwidth of the formant frequencies are supplied algorithmically but exact modelling of these bandwidths is relatively unimportant to the intelligibility of the speech. A controller delivers data to the model containing nine control parameters. These parameters set the formant frequencies and amplitudes and are:-

AH -amplitude of aspired sounds

AV -amplitude of vowel sounds

AF -amplitude of fricative sounds

AN -amplitude of nasal sounds

F1 -frequency of formant 1

F2 -frequency of formant 2

F3 -frequency of formant 3

FF -frequency of fricative formant

FV -frequency of oscillator

These parameters are generated by passing an input signal through time varying filters. The coefficients of these filters are then stored in ROM and used during synthesis. This technique is known as synthesis by rule because the rules for extracting the word signals are stored in hardware. Speech generated for formant synthesis is intelligible and more human sounding than phoneme synthesis. Bit rates for this technique are approximately 400 bits per second. More precise modelling of the formant bandwidths increases the quality of the speech but also increases the bit rate.

Waveform digitisation is theoretically the simplest form of speech synthesis. It is the earliest approach taken to speech synthesis and relies on effective analogue to digital conversion. An input source is converted to numerical data and stored in memory for later retrieval and output. Many digital codes and hence a large memory are required for accurate representation of the speech waveform. To reduce the large quantities of data stored, a compression algorithm can reduce the memory requirement by a factor of 100. No attempt at modelling the human vocal tract is made using this technique. Three compression techniques are used in National Semiconductor's Speech Processor Chip. Redundant pitch periods and portions of periods, redundant phonemes and portions of phonemes are removed by one technique. A second technique generates the amplitude of the proceeding waveform by a small addition to the previous value. The third technique removes the direction component (phase angle) of the speech waveform. From the compressed data, a waveform is produced during synthesis which sounds like the original waveform. Waveform digitisation is an analysis/synthesis method of speech synthesis.

The phase angles in sound are important in good quality music reproduction, yet for speech this information is irrelevant. Using Fourier analysis of the speech waveform, a waveform can be produced which has mirror symmetry and low amplitude for at least half the period. The mirror symmetry can be utilised by throwing away half the waveform and during 'playback' playing the remaining half forward then backwards. By reducing the low amplitude portion of the signal to zero, the amount of stored data is reduced by half without degrading the intelligibility of the speech. This technique is known as half period zeroing.

Phonemes and pitch periods are removed using repetition periods. A number of very similar periods may be replaced by one period produced a number of times. For a voiced waveform this repetition may occur 3 or 4 times and up to 7 or 8 for unvoiced waveforms. The unvoiced sounds are also standardized. During the compression algorithm, unvoiced sounds are compared to available sounds and synthesized by substitution as unvoiced sounds have very few speaker defined characteristics.

Adaptive delta modulation is the technique employed to produce one waveform from another. As speech waveforms are relatively smooth and continuous, if the differences in amplitude between successive digitisations rather than the actual amplitude values are stored then the information required to be stored is much less. The difference between successive digitisations is termed the delta value and is simply added to the previous digitisation. Each word or phrase has to be synthesized separately using waveform digitisation so memory requirements are much greater than for phoneme or formant synthesis. However, speech quality is very much better and is speaker recognisable. The compression algorithm allows a reasonably low data rate, rates as low as 1000 bits per word are achievable.

The spectral characteristics of speech vary at a speed which is determined by the muscular activity of the human vocal tract. This feature, coupled with human perception characteristics, means that, over a 20 -25 millisecond period, the spectral envelope of speech can be regarded as stationary. Linear predictive coding exploits these characteristics and models the human vocal tract by reproducing a time variant spectral envelope.

Over a finite interval, a speech sample can be represented by a linear combination of past speech samples and this forms the basis of linear predictive coding analysis. A unique set of predictor coefficients (K parameters) can be determined by minimizing the sum of the squared differences between actual speech samples and appropriately weighted linearly predicted values. The finite interval used for analysis is termed the analysis frame and a new set of K parameters is derived for each analysis frame.

The LPC parameters, along with energy (or gain) and pitch parameters and a voiced/unvoiced indicator, are used to synthesize speech using the same model or representation of human speech production as used for analysis. Synthetic speech is generated in frames corresponding to the original analysis samples. These frames are recreated by linearly combining previous speech samples that have been weighted by the prediction algorithm.

The speech synthesis model represents the human vocal tract by two energy sources, one of which is used to excite a time variant filter. Included in this filter are the composite spectral effects of radiation of the speech signal, vocal tract transfer function and glottal excitation.

An impulse generator excites voiced sounds by producing a fixed amplitude pulse at the start of each pitch period. The pitch period is determined by a slowly varying pitch period parameter. A white noise generator excites voiced sounds. The voiced/unvoiced control selects either of the two sources. The gain parameter influences all the spectral components of the generated signal and represents speech 'loudness'. Ten prediction coefficients (K parameters) are used usually to model the vocal tract using a ten pole lattice filter. The control parameters are typically updated more frequently than the frame rate to provide smoother transitions between parameter sets.

The linear predictive coding vocabulary is stored in frame format and each frame contains the necessary parameter information. A typical frame format for voiced speech may need as many as 50 bits to represent a frame of voiced speech. In the worst case, the maximum data rate is 40 frames per second, corresponding to a 25 millisecond frame period, multiplied by 50 bits per frame or 2000 bits per second. Frame length can be shorter, however. Unvoiced, repeat, silence and stop-code frames all require fewer bits than voiced frames. A typical linear predictive coding system requires 1200 bits/second to provide speaker recognisable speech.

A modern private automatic branch exchange (PABX) using stored program control (SPC) is capable of handling from 16 to 4000 extension lines. Like many modern exchanges many new facilities are provided such as call forwarding, do not disturb, extension abbreviated dialling and others, to the user.

Due to the increased complexity in the facilities offered by modern exchanges, there is a corresponding increase in the need to supply meaningful feedback to the user. While up to now it has been sufficient to use tones to provide this information, the point is now being approached where these may not be adequate.

Some attempt at a solution may be made by the use of recorded announcements, but these suffer from a number of drawbacks. Owing to the nature of the messages, it is necessary that each phrase be joined by the listener at the start of its cycle. This entails rewinding or fast forwarding a tape to the start of the required phrase for each message. The maximum access time of a message using such a system is equal to the rewind time for the whole tape. A further disadvantage of this method is that only one phrase may be output at any one time.

Alternatively, each phrase could be contained on a separate, continuously running tape loop. The maximum access time of each phrase is reduced by this method to the length of that phrase. While more than one phrase may be output at any time, each phrase may be accessed by only one channel at a time, making phrase concatenation a practical impossibility. Furthermore, one tape drive is required for each phrase. While such a system is possible for a large public exchange which does not require phrase concatenation, the size and cost would be prohibitive for a PABX.

The speech data can be stored in a digital format in memory. The maximum frequency required to allow reasonable quality speech over a telephone line is 4kHz. This means an 8kHz sampling frequency. Using 8 bits per sample this gives a bit rate of 64000 bits per second (b.p.s). The expected initial size of the PABX speech library is approximately 110 seconds of speech which requires a storage space of 860 Kbytes or 430 Kwords. The present memory capacity of the PABX is 1 Mword, that is almost half the available memory would be used to store speech data, not allowing for any future expansion.

The disadvantages may be overcome by the use of speech synthesis techniques. This considerably reduces storage requirements when compared with stored speech and phrases may be initiated at their start without the need to rewind any physical medium.

There are four main areas to which speech synthesis may be used to enable voice response to be applied on the PABX. These are:-

Supplementation of failure tones,

Indication of facility activation,

Indication of routing, and

Provision of ancillary information.

At present, two tones are used to indicate in excess of one hundred different cases of failure during call set-up or facility activation. The causes of these failures are varied, ranging from resource unavailability through equipment failure to user mis-operation.

Failure tones must be provided without significant delay after the failure has been detected, and any supplementary message should be applied equally promptly.

On completion of the supplementary message, the tone sequence supplied currently is started. This takes place immediately if voice response is not provided for any reason.

The activation of a facility is indicated in one of three ways. When a facility is activated, confirmation is usually provided by the application of a switching tone. When a facility is cancelled, continued operation is often allowed so the tone provided is, in these cases, normal or special - (interrupted) dial tone. In most other cases, reconnection to the call is the only confirmation given.

In the first case it is possible to provide verbal confirmation that the facility was successfully invoked, so it is desirable, for consistency, to provide a similar indication when the facility is cancelled, provided the delay that this would introduce does not become unacceptable. Where reconnection is taking place, any delay is considered unacceptable.

It would also be useful to supplement the use of special dial tone to indicate which facility is activated. Where, for instance, both do not disturb (DND) and call diversion are activated, the latter only should be indicated.

Accordingly an aim of the present invention is to provide a voice synthesis module for use in telecommunications which does not suffer from the problems experienced in the prior art synthesizers.

According to the present invention there is provided a voice synthesis module for use in a telecommunications exchange, wherein the module is provided with connection means permitting the module to be connected to the exchange so that the exchange controls the module to activate circuit means in the module to generate a voice response message appropriate to a particular exchange condition to inform an exchange user of the condition.

According to an aspect of the present invention there is provided a voice synthesis module wherein the circuit means is activated in a manner permitting the voice response message to be generated to supplement condition-indicating tones used to inform the exchange user of the condition.

According to yet a further aspect of the present invention there is provided a voice synthesis module controlled by a computer program wherein the program is designed using a structured programming method, the method involving the creation of data structure diagrams combined into a basic program structure and expanded to include all program operations from which a pseudocode is written.

An embodiment of the invention will now be described with reference to the accompanying drawings wherein:

Figure 1 shows a block diagram of a voice synthesis module according to the present invention,

Figure 2 shows a block diagram of CPU, memory and address decode logic of the module shown in Figure 1,

Figure 3 shows a memory map for the voice synthesis module,

Figure 4 shows a block diagram of a voice synthesis processor used in the voice synthesis module,

Figure 5 shows a timing diagram of the speech output stream of the processor of Figure 4,

Figure 6 shows a block diagram of the timing, control and interface logic shown in Figure 1,

Figure 7 depicts a table showing a command structure for the voice synthesis module,

Figure 8 shows a timing diagram for a receive and transmit command cycle of the block diagram shown in Figure 6,

Figure 9 shows a representation of Jackson structured programming,

Figure 10a shows the input data structure,

Figure 10b shows the speak external command output data structure; and,

Figure 10c shows the speech data output data structure,

Figure 11 shows a block diagram of the voice synthesis module basic program structure,

Figures 12a and 12b show a block diagram of the program structure for a reset routine, when Figure 12b is placed to the right of Figure 12a and connected at junction A,

Figure 13 shows a block diagram of the main voice synthesis module program structure,

Figure 14 shows a block diagram of a P.VCOMM program structure,

Figure 15 shows a block diagram of a P.VSTAT program structure; and,

Figure 16 shows a block diagram of a P.SPDAT program structure.

The following description defines the hardware and hardware/software interface requirements for implementation of a voice response system on the PABX using voice synthesis. The circuit board is referred to as the Voice Synthesis Module (VSM).

The VSM consists of eight speech synthesis channels, and is situated on the intershelf bus (ISB) in a similar manner to a tone generator card. This enables one VSM to be accessed by all extension cards.

Enough memory is included on the VSM to allow for at least 200 seconds of speech data. This memory is capable of being addressed using the eight bits of the data bus upper byte. The VSM has the capability of buffering at least two phrase addresses. Each speech channel is able to access any phrase and each phrase is able to be accessed by more than one channel. The VSM is capable of allowing for phrase concatenation.

Each phrase is accessed from the start of its cycle and any message is able to be aborted at any time. Timing and control of speech data is carried out on board the VSM but interface timing is under PABX system control.

Commands are received from the address bus and are specified for receive from and transmit to the PABX data bus, channel transmit to the PABX data bus, up and down card and abort channel output. The receive (from data bus) command indicates that a phrase address is available on the data bus and the transmit (to data bus) command is a request for the output of an on-board status register to be put onto the bus. The status provides indications of which channels are presently 'talking' and buffer availability. The receive from and transmit to data bus, channel transmit and abort channel commands also contain all necessary channel information.

The phrases to be used require careful consideration and a custom made library is necessary.

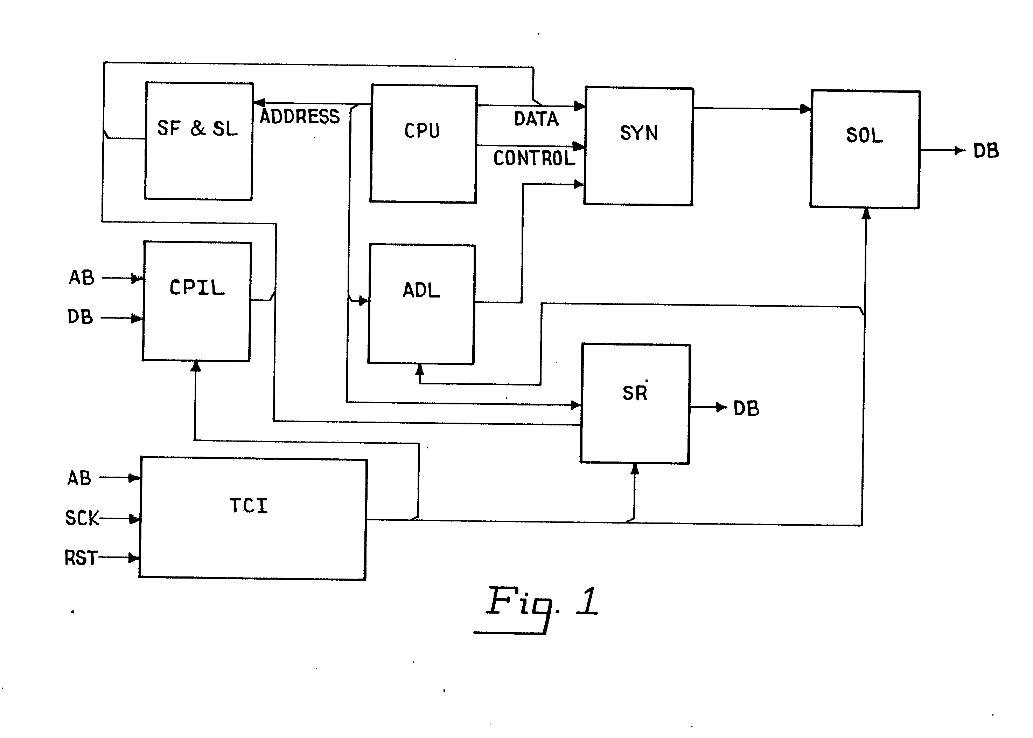

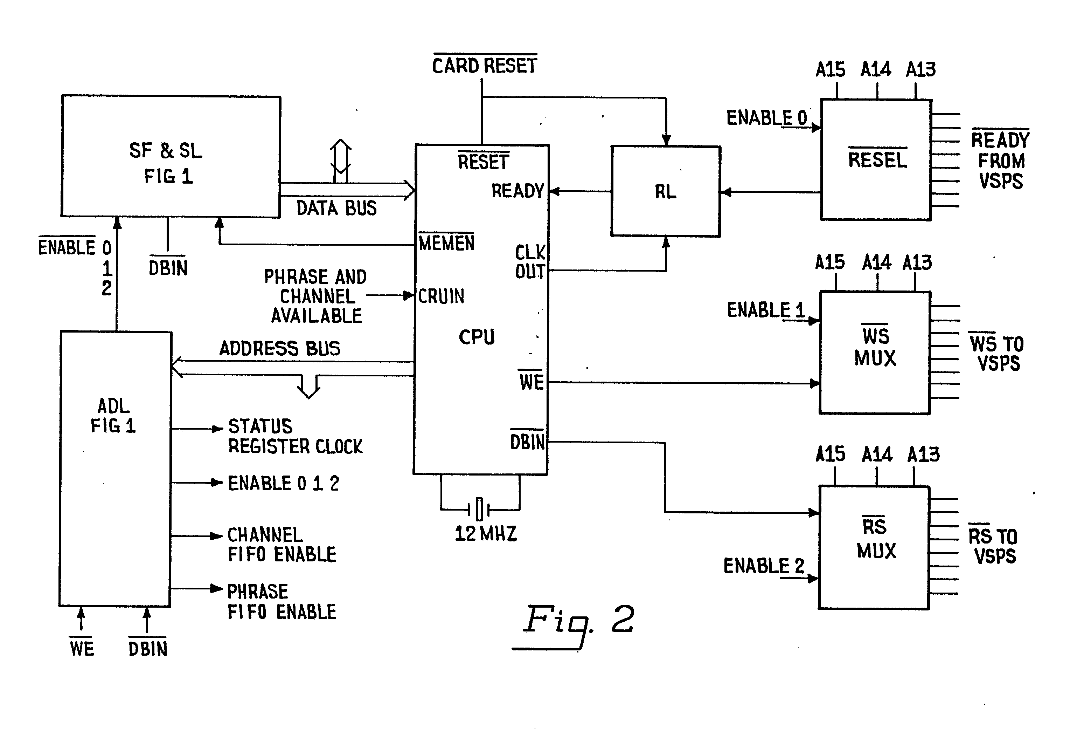

Referring to a block diagram of Figure 1, the Voice Synthesis Module is shown, and will now be discussed. The VSM contains eight speech synthesis channels SYN and one speech data library contained in up to three 128K EPROMS SL. One of these EPROMS also contains the VSM system firmware SF.

The CPU is a 16 bit microprocessor and is used because of the need to multiplex eight speech synthesizers to one speech data library. To avoid bus contention problems, the microprocessor controls the transfer of speech data from the library SL to each synthesizer SYN. The synthesizers are mapped into memory, and are therefore addressed as memory locations.

The address decode logic ADL decodes the address from the CPU and enables the speech synthesizers SYN, the input to the status register SR and the output from the channel and phrase input logic CPIL. The timing, control and interface logic TCI controls the input of information from the address bus AB and data bus DB to the channel and phrase input logic CPIL and the output of information from the speech output logic SOL and the status register SR to the data bus DB.

On power-up of the VSM or on receipt of a reset signal RST from the PABX, the timing, control and interface logic TCI resets the CPU and the channel and phrase logic CPIL. The CPU then enters a reset routine which resets the speech synthesizers SYN and clears the status register SR. The timing, control and interface logic TCI also receives the system clocks SCK from the PABX. Scanning of the speech synthesizers SYN in turn is then begun by the CPU. Each synthesizer SYN is checked for a data request and between each synthesizer access, the channel and phrase logic CPIL is checked for new phrase information. The status register SR is updated after each channel access.

Under PABX software control, the timing, control and interface logic TCI clocks the channel number and phrase number into the channel and phrase input logic CPIL. An indication that new channel and phrase numbers are available is flagged to the CPU. These numbers are read by the CPU during its scanning routine and the CPU starts the required synthesizer SYN 'speaking'.

The digital speech output is converted from serial to parallel and is latched ready for output to the data bus DB. The timing, control and interface logic TCI sends the channel number and output command to the speech output logic SOL. Speech data is A-law companded before being output to the data bus.

The status register SR is read by the PABX system software by sending an output command via the timing, control and interface logic TCI to the status register SR. Data from the status register SR is output directly onto the data bus DB.

The central processing unit (CPU) used on the VSM is a 40 pin, single 5 volt supply, single chip 16 bit microprocessor with 256 bytes of on-chip RAM. The instruction set is based on a memory-to-memory architecture that features multiple register files resident in memory. The external data bus is 8 bits wide but the instruction set allows both word and byte operations. Serial I/O of varying bit width is accomplished through the use of a communications register unit (CRU). A clock of from 4 to 12 MHz is required, for which an internal crystal controlled oscillator or an external frequency source is used. A CLKOUT signal is generated which is one fourth the fundamental clock frequency. WAIT states can be generated for external memory cycles, external CRU cycles and external instruction cycles. Automatic WAIT states may be generated for use in each external memory cycle.

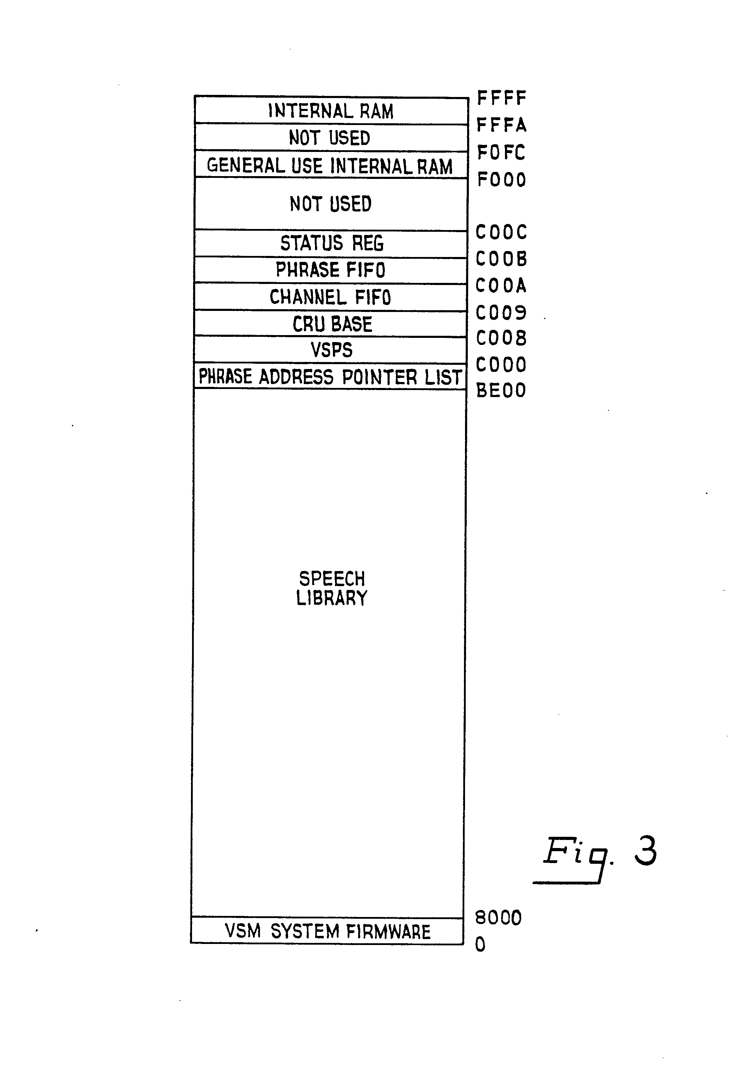

Blocks of memory words called workspaces are used by the CPU for instruction operand manipulation. A workspace can occupy sixteen contiguous words in any part of memory that is not reserved for other use. Data or address may be contained in individual workspace registers or they may function as accummulators or operand, address or index registers. During the execution of certain instructions, some workspace registers take on special significance. The workspace is located in memory using a hardware workspace pointer (WP). This is a 16 bit register containing the address of the first word in the workspace. The workspace concept is particularly valuable during operations requiring a context switch. Such a switch is achieved by simply changing the workspace pointer. The VSM uses two workspaces located in the internal RAM area of the CPU. Figure 2 shows the relationship between the VSM memory, CPU and address decode logic and Figure 3 shows the memory map. Referring to Figure 2 and Figure 3, the system firmware SF and speech library SL are contained in three EPROM's. The VSM firmware is allocated 2K bytes at the bottom of memory. The phrase address list takes up 512 bytes beginning at location BE00. This leaves 45.5K bytes of memory for speech data. The eight Voice Synthesis Processors (VSP's), the channel and phrase FIFO's and the Talk Status register are also configured as memory locations to take advantage of the memory architecture of the CPU.

The CPU controls all data transfers between memory, voice synthesis processors, channel and phrase FIFO's and the status register SR Figure 1. It also carries out address calculations and stores all dynamic information.

On power-up or on receipt of a CARD RESET signal from the timing, control and interface logic TCI, Figure 1 the CPU resets all the voice synthesis processors. It does this by writing eight bytes of data, consisting of all 1's, followed by a reset byte to each voice synthesis processor in turn. After resetting each voice synthesis processor, the CPU reads the voice synthesis processor status byte to check that reset has occurred. If the voice synthesis processor has not been reset, the CPU attempts again to reset it.

Once all the voice synthesis processors have been reset, the CPU checks its CRUIN input to determine if new channel and phrase numbers are available. If there is no data available the CPU begins scanning each voice synthesis processor channel in turn, beginning at channel 0, for data request. The VSM status register SR, Figure 1 is updated after each voice synthesis processor channel access and CRUIN input is again checked.

If new channel and phrase numbers are available the CPU reads the channel FIFO and phrase FIFO in turn. The channel number signifies which voice synthesis processor is to speak the indicated phrase. The phrase number provides an index to a phrase pointer table address which in turn points to the address of the first byte of the required speech data. The phrase number is related to the phrase pointer table by the following equation:-

$$(\text{Phrase number}_{16} \times 2) + \text{BE00}_{16} = \text{Phrase pointer table address}_{16}$$

The phrase pointer table address and phrase pointer table address plus one provide the CPU with the address of the first byte of speech data associated with the required phrase. The phrase pointer table address plus two and the phrase pointer table address plus three provide the CPU with the start address of the next consecutively numbered phrase i.e. the end address of the required phrase.

When these addresses have been calculated and stored in the CPU's workspace, the CPU sends a Speak External command to the voice synthesis processor channel indicated by the channel number. Sixteen bytes of speech data are then transferred from the library to the voice synthesis processor and the voice synthesis processor begins to speak. The CPU then updates the VSM status register and begins scanning the voice synthesis processor channels again, starting from where if left off.

If speech data is requested from one of the voice synthesis processor's during the scanning routine, the CPU causes a further eight bytes of speech data to be transmitted to that channel. Before each speech data byte is transmitted to the voice synthesis processor, the address of the data byte is compared with the start address of the next consecutively numbered phrase. If these two addresses are equal, the CPU recognises that the required phrase is complete and ensures no more speech data is transmitted. If 8 bytes have not been transferred the CPU transmits bytes of all 1's until a full 8 bytes have been transferred.

The CPU continues to cycle in this manner, scanning each voice synthesis processor channel in turn and checking the CRUIN input after each voice synthesis processor channel access, until either a reset occurs or VSM power is lost.

Since the voice synthesis processors, channel FIFO, phrase FIFO and VSM status register are mapped into memory, the data transfers between the CPU and VSM can be considered as being divided into 3 types.

(1) Memory read -from EPROM, VSP's or FIFO's to CPU

(2) Memory write -from CPU to VSP's or status register

(3) CRU read.

During a read from memory, the CPU puts the appropriate memory address onto the CPU address bus and asserts signal $\overline{\text{MEMEN}}$. The address decode logic ADL decodes this address and enables the appropriate memory device. The CPU then asserts signal $\overline{\text{DBIN}}$ and reads in the data byte after signal READY goes true. An automatic WAIT state is generated during every memory access. This causes the address, and signals $\overline{\text{DBIN}}$ and $\overline{\text{MEMEN}}$ to be held for one extra CLKOUT cycle, regardless of the state of the READY input, to ensure that valid data is available on the data bus. This is not necessary during most memory accesses and serves only to slow down the CPU. However, the voice synthesis processors are not able to have valid data on the data bus for at least 6μs. The READY input of the CPU is used in this case to hold the CPU until the voice synthesis processor can provide valid data. The voice synthesis processor cannot take the READY input of the CPU low during the first CPU CLKOUT cycle, hence the need for an automatic WAIT state in this instance and hence all memory cycles have to suffer a delay due to this automatic WAIT state.

During a write to memory, the CPU puts the appropriate memory address on the address bus and asserts signal $\overline{\text{MEMEN}}$. The appropriate memory device is enabled and the CPU puts the data byte being written to memory onto the data bus and asserts signal $\overline{\text{WE}}$. The memory write cycle is complete when the READY signal is asserted. Again, there is an automatic WAIT state generated on every memory access, because the voice synthesis processor takes at least 23 $\mu$s to read in the data on the data bus.

During a read from an external CRU device, in this case the data available flag from the channel and phrase FIFO's, the CPU outputs the appropriate address on the address bus. The signal $\overline{\text{MEMEN}}$ remains high. The CPU strobes signal $\overline{\text{DBIN}}$ and reads in the data bit via the input CRUIN.

The $\overline{\text{READY}}$ selector, $\overline{\text{RESEL}}$, multiplexer $\overline{\text{WS}}$ mux and multiplexer $\overline{\text{RS}}$ mux are used to drive the appropriate voice synthesis processor during a voice synthesis processor access cycle. Address bits A13-A15 and ENABLE 0 together with ENABLE 1 during a memory write cycle and ENABLE 2 during a memory read cycle are used to select the appropriate voice synthesis processor channel. Signal $\overline{\text{DBIN}}$ is multiplexed by the multiplexer $\overline{\text{RS}}$ mux to provide a read strobe for the selected voice synthesis processor channel, similarly output $\overline{\text{WE}}$ provides a write strobe signal. The $\overline{\text{READY}}$ selector selects the READY signal from the VSP channel, inverts it and provides $\overline{\text{READY}}$ to the CPU.

If the CPU is engaged in a voice synthesis processor access cycle when a $\overline{\text{CARD RESET}}$ occurs, there is a possibility that the READY signal will be at logic 0 when the CARD RESET goes to logic 1. This will cause the automatic wait states not to be generated. It is necessary to clock the READY output from the $\overline{\text{READY}}$ selector into a latch RL and to use the $\overline{\text{CARD RESET}}$ signal to preset the output of this latch RL to logic 1 during reset. An advantage of this arrangement is that the CPU is then synchronised to the voice synthesis processors.

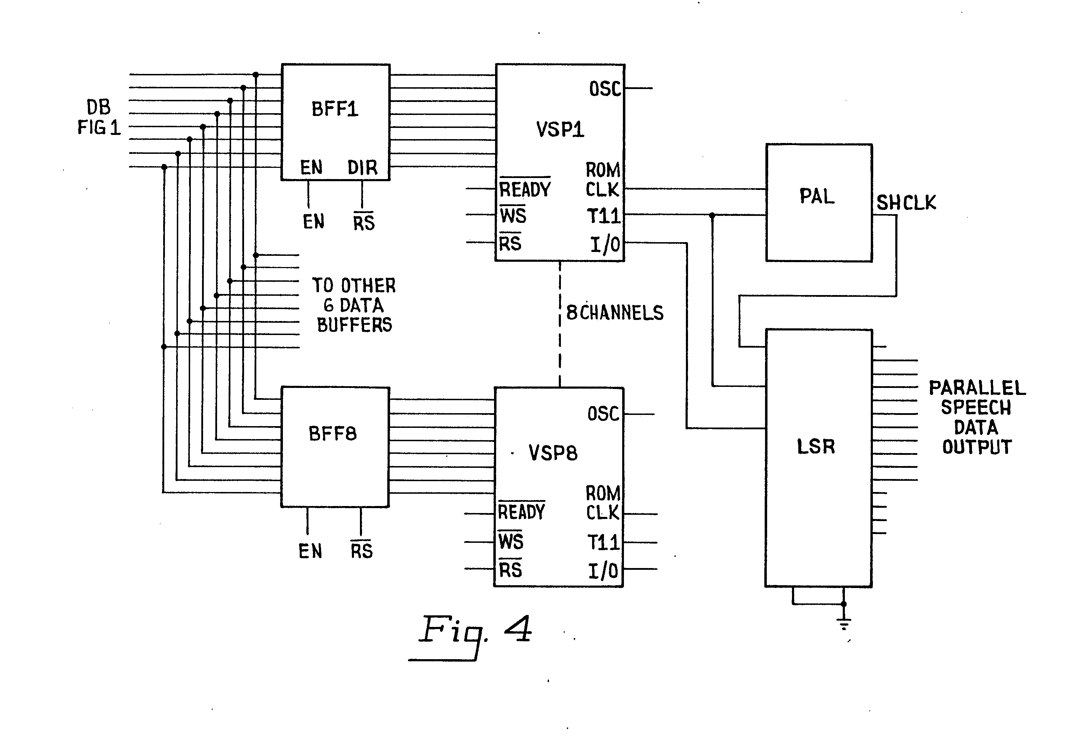

Referring to Figure 4 the voice synthesis module uses eight voice synthesis processors VSP1-8 arranged as shown. Each processor is a 28 pin, dual supply, TTL compatible integrated circuit which uses linear predictive coded speech data to produce synthetic speech. It contains CPU I/O control logic to interface to an external CPU, a command register to hold command data from the CPU, a status register which provides up-to-date information to the CPU on the state of the voice synthesis processor, a 16 byte FIFO to hold speech data passed from the CPU after a Speak External command, a speech synthesizer to recover the LPC speech data, a digital to analogue converter to produce an analogue speech waveform and timing control logic.

The voice synthesis processor can use speech data encoded using LPC techniques at an 8kHz or 10kHz sampling rate. The processor can be driven directly by an external clock applied to the OSC input. This external clock can be derived from one of the PABX system clocks. An advantage of this arrangement is that the VSP output is synchronised to the PABX.

The CPU data bus DB Figure 1, is commoned to eight bi-directional buffers BFF1-8 which are normally configured to allow, when enabled by signal EN data transfer from the CPU to all the voice synthesis processors. By applying a $\overline{\text{RS}}$ signal to the DIR pin of one of these buffers, data can be transferred from its associated processor to the CPU.

Each processor provides a status byte, when requested to do so by the CPU. Only three bits of this byte contain data of any significance. These three bits are Talk Status - (TS), Buffer Low (BL) and Buffer Empty (BE). TS is at logic 1 when the VSP is processing speech data (i.e. speaking). BL is at logic 1 when the 16 byte FIFO is more than half empty. BE is at logic 1 when the 16 byte FIFO has run out of data while executing a Speak External command.

If after power-up or PABX system reset, nine bytes of all 1's are written to the voice synthesis processor followed by a reset command then the voice synthesis processor is guaranteed to reset. If the voice synthesis processor has powered-up in Speak External mode then the 16 byte FIFO must be filled to over half full before the VSP will begin processing the data in the FIFO. Hence the need for nine bytes of all 1's to be written to the voice synthesis processor. When the voice synthesis processor recognises the first byte it begins processing a stop code (all 1's), thus it stops processing data, clears the FIFO and sets itself into command mode whereupon it immediately receives a reset command.

On reset, talk status TS is cleared and any speech activity halted and the 16 byte FIFO is cleared, causing buffer low BL and buffer empty BE to become active. The voice synthesis processor is set to allow data to be written to the command register and data to be read from the status register.

To read the status byte the CPU causes signal $\overline{\text{RS}}$ to be generated for the appropriate voice synthesis processor. This signal also causes the associated bi-directional data bus buffer to change direction allowing data transfer from voice synthesis processor to CPU. On receipt of signal RS, the voice synthesis processor takes the $\overline{\text{READY}}$ signal to logic 1, routes the status data to the data bus and lowers the $\overline{\text{READY}}$ line when the data is stable. The CPU then reads the status byte and takes signal RS to logic 1. The voice synthesis processor then disables its outputs. However, the disabling of these outputs can take up to 10.5 microseconds and this delay is the reason for the bi-directional data buffers, which isolate the voice synthesis processor outputs from the data bus as signal RS goes inactive.

Commands are sent to the voice synthesis processor by the CPU causing signal $\overline{\text{WS}}$ to be applied and putting the command onto the data bus. The voice synthesis processor causes the $\overline{\text{READY}}$ signal to become inactive (logic 1) and reads the data into the command register. On completion of the read the voice synthesis processor activates the READY signal, interprets the command and executes it. The two commands the VSM uses are Reset and Speak External.

On receipt of a Speak External command, the voice synthesis processor is set into Speak External mode and clears the 16 byte FIFO buffer. All data received by the voice synthesis processor is then directed to this buffer until the voice synthesis processor receives, and executes, a stop code. As soon as one byte has been written to the buffer, the buffer empty signal BE becomes inactive (low). When the CPU has loaded nine bytes of data into the buffer, the buffer low signal BL becomes inactive, talk status signal TS becomes active and the voice synthesis processor begins processing speech data from the buffer. A further seven bytes of data are loaded into the voice synthesis processor to fill the buffer.

Eight bytes of speech data from the buffer will produce at least 25 milliseconds of synthesized speech. When the FIFO contains less than nine bytes of data, buffer low signal BL becomes active. The CPU then has at least 25 milliseconds to recognise that buffer low signal BL has become active, by reading the voice synthesis processor status byte, and to begin transferring a further eight bytes to the voice synthesis processor. This 25 millisecond requirement also dictates the speed of the processor. In the worst case, all eight channels need to have 16 bytes of data transferred to them. This occurs when all speech channels are being started together. To ensure that the first channel can have new data supplied when it is needed, the CPU must be capable of sending 8 x 16 bytes of speech data and complete its scanning routine to the first channel within 25 milliseconds. With the present firmware, this is achieved in approximately 3.5 milliseconds.

The CPU will continue to load the buffer with speech data, eight bytes at a time, until it reaches the end of speech data for the particular phrase being output. Each phrase has a stop code encoded at the end of it, but to ensure that the voice synthesis processor does receive a stop code, the CPU sends bytes of all 1's until the voice synthesis processor does recognise a stop code and stops processing speech data.

Operating in parallel with speech data processing is synthesized speech output. The processor is capable of speech output in two ways, firstly as a 10 bit, serial output digital format and secondly, after eight bit digital to analogue conversion, as an analogue waveform. The VSM uses the digital output as all internal speech transmissions on the PABX are carried out digitally.

The PABX converts all speech waveforms to eight bit parallel A-law companded digital data. To be compatible with this format, the digital output from the voice synthesis processor must be converted from ten bit serial to eight bit A-law companded. The A-law conversion takes place just before the data is written to the PABX system bus and will be described later in relation to the timing, control and interface logic.

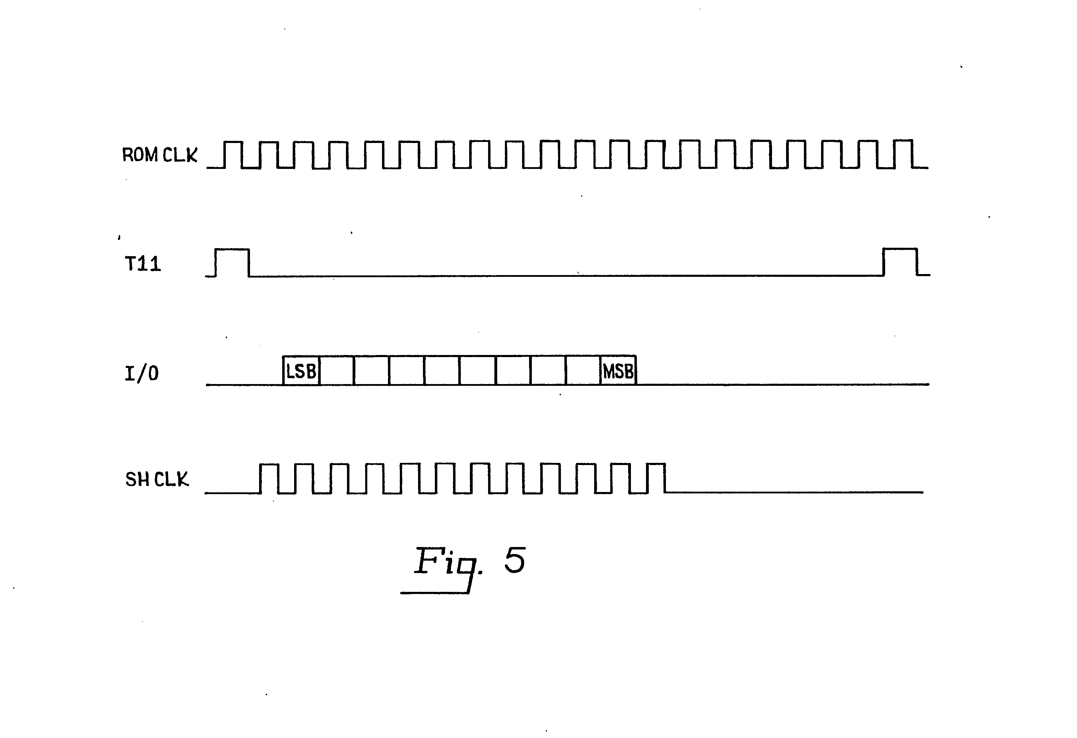

The timing of the speech output stream is shown in figure 5. ROMCLK is a 160 kHz clock derived from the voice synthesis processor master oscillator, and is used to generate signal SHCLK which is used to clock the digital speech output into a 16 bit shift register. Signal T11 provides a synchronising pulse and causes new data to arrive on the shift register outputs at an 8kHz data rate.

On the falling edge of signal T11, an 11 bit counter on the clock generator PAL (programmable array logic) is triggered. The clock for this counter is provided by signal ROMCLK. While the counter is enabled, signal ROMCLK is allowed to propagate through the clock generator PAL and out on the output SHCLK. After counting to 11, the output SHCLK is disabled, thus providing the 16 bit shift register LSR with a 12 bit clock signal shown in Figure 5. The serial data output from the voice synthesis processor is shifted in to the 16 bit shift register on the rising edges of signal SHCLK. The first and last rising edges of signal SHCLK shift invalid data into the shift register therefore only bits 2 to 11 of the shift register are used.

On the rising edge of signal T11, the 16 bit shift register is loaded into a 16 bit output buffer contained on the same chip as the shift register. The digital output from the voice synthesis processor is then available in ten bit parallel format for use by the timing, control and interface logic.

The voice synthesis module, (VSM) needs to be able to receive phrase and channel information from the PABX CCU (command and control unit) and to transmit status and synthesized speech to the PABX CCU and the receiving extension respectively. The Timing, Control and Interface Logic controls this information exchange and also passes control signals, such as RESET, from the PABX system to the VSM.

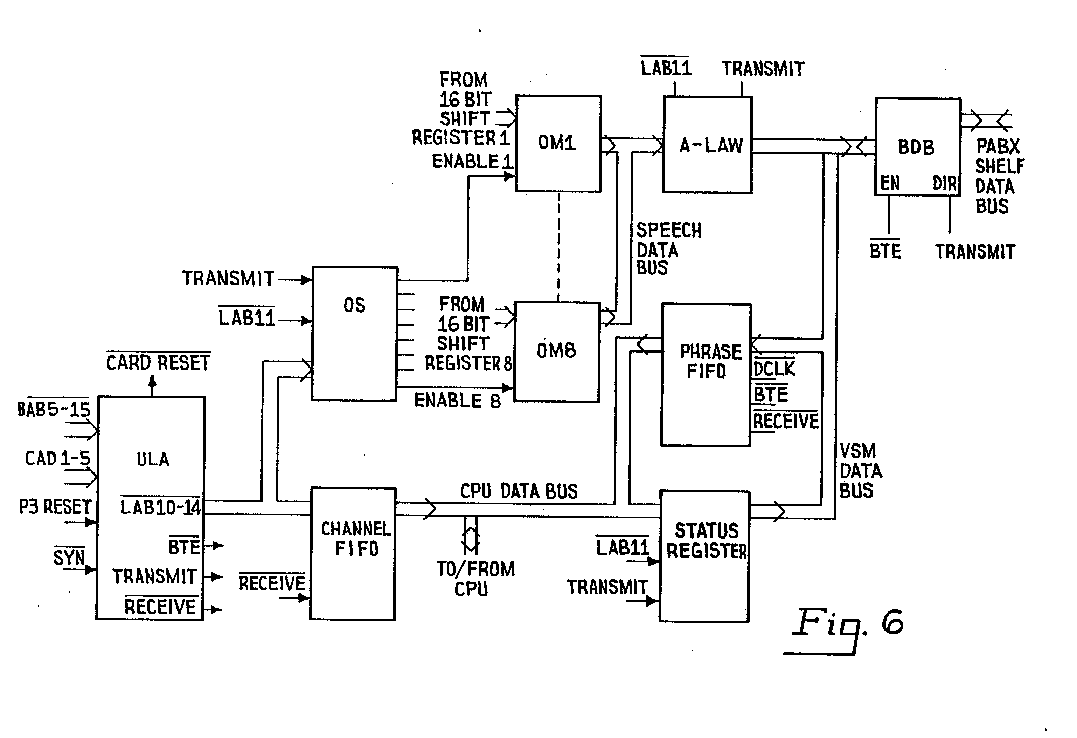

Referring to Figure 6 the Timing, Control and Interface logic block diagram is shown. The ULA (Uncommitted Logic Array) is a custom designed integrated circuit which carries out command decoding, interface timing and control signal generation. Channel and phrase numbers are clocked into the channel and phrase FIFO's, and the status register transmits the status byte to the PABX system data bus, under ULA control. The output selector enables one of eight output multiplexers OM1-8. These multiplexers allow the output from their associated 16 bit shift registers to pass through to the address inputs of the A-law ROM. The A-law ROM provides conversion from 10 bit parallel speech data to 8 bit A-law companded speech data. This companded speech data is passed onto the PABX system bus. The bi-directional buffer BDB determines if data is transferred to or from the PABX system bus and is enabled by the $\overline{BTE}$ output signal of the ULA.

The PABX system buses are time division multiplexed. Address and data on these buses is changed once every 244 nanoseconds. This period is termed a timeslot and there are 512 timeslots, meaning that each timeslot is accessed once every 125 microseconds. This gives a data rate of 8 kilohertz. The PABX system data bus is divided into two 8 bit buses, termed data bus upper byte and data bus lower byte. A speech connection is made in the following way. First, one telephony channel is commanded to transmit speech data on one half of the data bus and to receive speech data on the other half of the data bus, during one of the 512 timeslots excluding timeslots 0 to 7. Another telephony channel is commanded to receive data on that half of the data bus on which the first channel is transmitting and to transmit on the other half of the data bus, during the same timeslot as the first channel. The two telephony channels then have a speech connection between them. A speech connection between the VSM and telephone channel is made in much the same way except that the VSM cannot receive speech data so that part of the connection is not made.

Each telephony card in the PABX system is given a unique number, determined by the shelf and slot in which it is inserted. To transfer information to and from a particular card on the system, the card's shelf and slot address is aserted on the system 16 bit address bus. Addres bus bits 0-4 contain the shelf number and bits 5-9 contain the slot number. The remaining address bits, 10-15, are used to send commands.

The shelf address is decoded by the shelf interface card which, when it recognises its own shelf address, buffers address bus bits 5-15 through onto the shelf address bus. These appear as $\overline{BA\,B5\text{-}15}$. Each card on that shelf compares address bus bits $\overline{BAB5\text{-}9}$ with its own card address, CAD1-5. This comparison is carried out in the ULA.

When a card recognises its own address, it latches address bus bits $\overline{BAB10-15}$ into the ULA and these appear as $\overline{LAB\ 10-14}$. $\overline{LAB15}$ is used internally in the ULA. The ULA also interprets the command contained in these address bits and generates control and timing signals to execute the command.

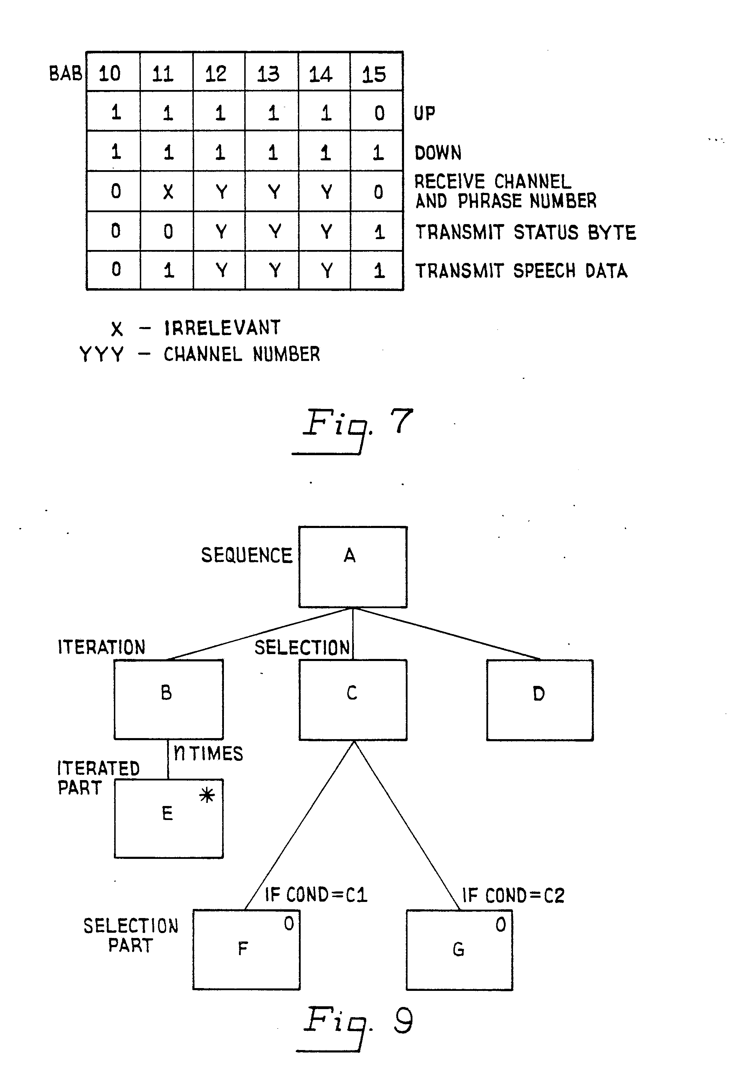

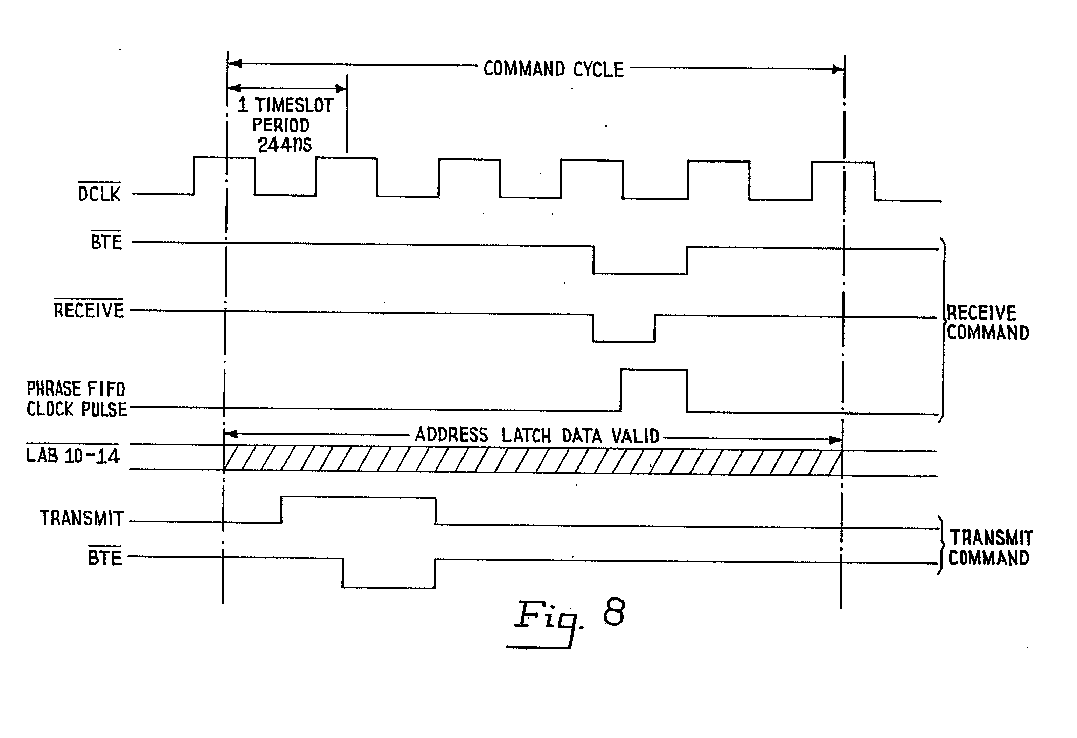

The commands recognised by the VSM are listed below and the command structure is shown in the table shown in Figure 7.

(1) Up/Down

(2) Read channel and phrase number from address and data bus respectively

(3) Transmit status byte to data bus

(4) Transmit speech data to data bus

The ULA also reacts to two control signals, P3 RESET and $\overline{SYN}$ (system normalise). Both these signals generate a $\overline{CARD\ RESET}$ pulse which resets the VSM, CPU and channel and phrase FIFO's immediately.

When the DOWN command is executed, the ULA outputs are disabled. Only a RESET or UP command will restore the logic. Other commands have no effect. An LED indicator on the VSM shows which state the VSM is in.

When this command is received and decoded, the ULA generates a $\overline{RECEIVE}$ pulse and a $\overline{BTE}$ (bus transceiver enable) pulse. The $\overline{RECEIVE}$ pulse is used by the VSM to clock the latched address bus, $\overline{LAB10-14}$ into the channel FIFO. Bits 12-14 of the latched address bus are used by the CPU as a channel number, bit 11 is spare. The channel FIFO is a 16 word deep, 5 bit wide first-in first-out memory. This allows up to 16 channel addresses to be stacked up, waiting for the CPU to read the FIFO. The $\overline{BTE}$ pulse enables the bi-directional buffer BDB. The transfer direction of this buffer is determined by the TRANSMIT signal from the ULA. Under normal circumstances, the TRANSMIT signal is at logic 0 and this allows data to pass from the shelf data bus to the VSM data bus. As the VSM cannot transmit and receive data from the shelf data bus at the same time, only one half of the data bus is buffered onto the VSM. During a transmit cycle, the TRANSMIT signal goes to logic 1 and data passes from the VSM data bus to the shelf data bus.

The timing diagram for the receive command is shown in Figure 8. The falling edge of signal $\overline{DCLK}$ to clock the $\overline{RECEIVE}$ pulse into a latch, clearing the latch on the rising edge of signal $\overline{BTE}$. This produces the phrase FIFO clock pulse as shown in Figure 8 which has a high time of 122ns and permits the data a 61ns settling time before starting to load the data into the phrase FIFO.

The phrase FIFO is an 8 bit wide, 32 byte deep first-in first-out memory. Only 16 bytes of this memory can ever be used as the channel FIFO is only 16 words deep and for each phrase number there must also be a channel number. The phrase FIFO outputs are permanently enabled and are buffered onto the CPU data bus. The buffer is enabled by the CPU when it wants to read the phrase number, and after the phrase number has been read by the CPU, the next available phrase number is enabled onto the FIFO outputs ready for the next CPU access.

The transmit status command causes a TRANSMIT pulse to be generated by the ULA. This causes the bi-directional buffer BDB to reverse its direction and allows the data on the VSM data bus to pass onto the shelf data bus. Signal BTE is used to enable the buffer. The TRANSMIT command is gated with signal $\overline{LAB11}$ and the resulting signal enables the status register outputs onto the VSM data bus.

The transmit speech data command also causes a TRANSMIT pulse to be generated to reverse the bi-directional buffer. Signal $\overline{BTE}$ is again used to enable the buffer. In this instance, the TRANSMIT pulse is gated with signal $\overline{LAB11}$ and the resulting signal enables one of the eight outputs of the output selector OS. The output enabled is determined by signal $\overline{LAB12-14}$. The selected output then enables one of the eight output multiplexers OM1-OM8 and this allows the 10 bit parallel speech data from its associated 16 bit shift register to pass through to the address inputs of the A-law ROM. This ROM is also enabled by the TRANSMIT pulse gated with signal $\overline{LAB11}$. When enabled, the ROM is used as a look-up table, addressed by the 10 bit parallel speech data. The data outputs of the ROM provide 8 bit parallel A-law companded speech data and this is transferred via the bi-directional buffer BDB to the shelf data bus.

The firmware is the controlling program, or operating system, of the VSM. Firmware is a software program stored statically on an integrated circuit i.e. ROM, PROM OR EPROM. The VSM firmware resides in EPROM, beginning at location 0000H (hexadecimal), which is the restart location for the CPU. 2K bytes of memory are reserved in the memory map for the firmware.

The firmware program is designed using Jackson Structured Programming techniques. This is a program design method which bases the program on the data structures of the system under consideration. The method involves creating data structure diagrams and combining them into one basic program structure. This is then expanded to include all the program operations and finally a schematic logic or pseudocode can be written. It is programming language independent and hardware independent so a further step is necessary to produce the actual program code but this is a simple translation of the pseudocode.

The data structure diagrams and program structure diagrams take the place of flow diagrams. The program flow is from top to bottom, left to right in these diagrams. There are only three component types used in Jackson Structured Programming, sequence, iteration and selection. Sequence refers to a first, then ..., last procedure, iteration to an over and over again procedure and selection to an either-or procedure. The graphical representations of these component types are shown in Figure 9.

A represents the program as a whole and is a sequence of B then C then D. B itself is an iteration with the iterated part E, denoted by the asterisk. The iterated part may occur zero or more times depending on the iterating condition. C is a selection with selection parts F and G, denoted by the circle. Only one of these parts is performed, the part being performed depending on the condition. Selection with only one selection part also exists and is depicted by an empty, conditionless selection part.

Each box does not indicate to which component type it belongs, this is determined by checking the next level below.

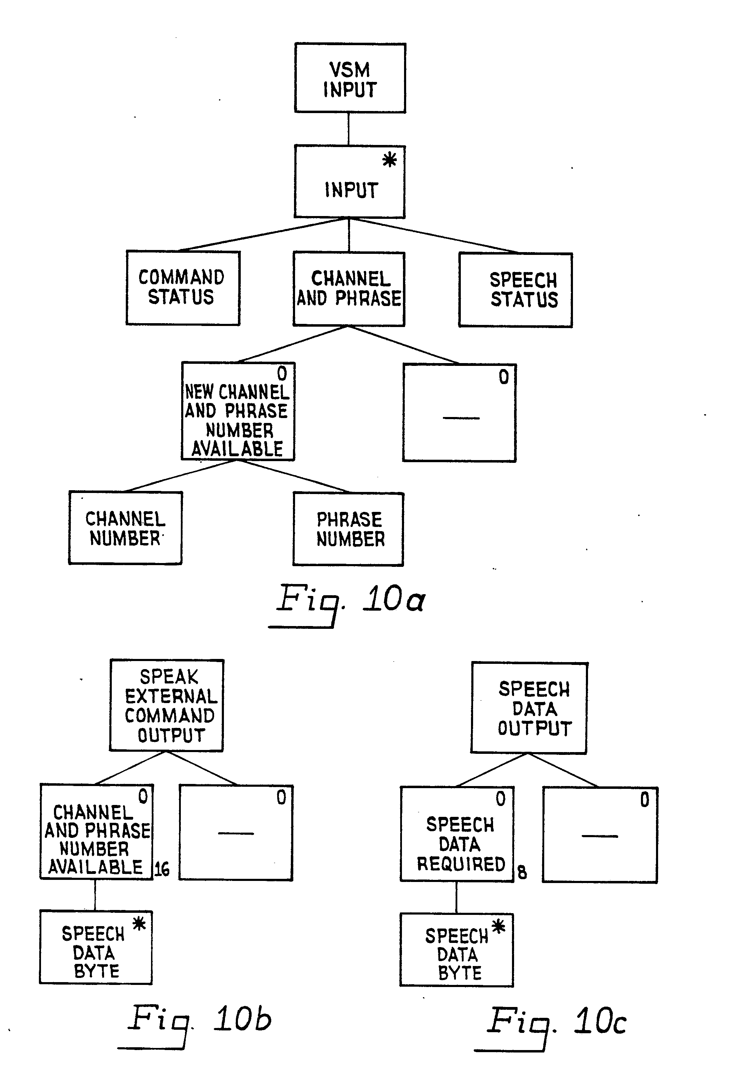

Figures 10a, 10b and 10c show the data structures of the VSM. These are sub-divided into input and output, the output data structure being further subdivided into Speak External command output and Speech Data output. There is a further output from the CPU, the RESET command to the voice synthesis processor, but as this occurs once only when the CPU is reset, it is dealt with in a separate reset routine.

Figure 10a shows the input data structure of the VSM. The first block, labelled VSM INPUT, is an iteration with the iterated part, INPUT. Input is itself a sequence of COMMAND STATUS, CHANNEL & PHRASE and SPEECH STATUS. COMMAND STATUS denotes an input to the CPU which indicates whether new channel and phrase numbers are available. CHANNEL & PHRASE is a selection. The selection parts, denoted by the circle, have their conditions written in the boxes. The left most selection part is performed if new channel and phrase numbers are available. If this condition is met, channel and phrase numbers are read into the CPU sequentially. The right most selection part is empty. Finally, SPEECH STATUS denotes an input to the CPU which indicates whether a VSP requires more speech data.

Figure 10b shows the Speak External command output structure. If new channel and phrase numbers are available, the CPU writes 16 bytes of speech data to the relevant voice synthesis processor. This is indicated by the left hand side of the structure. The right hand side is an empty selection part included for completeness.

Figure 10c shows the Speech Data output structure. If a voice synthesis processor requests more speech data the CPU writes 8 bytes of speech data to the voice synthesis processor. Again there is an empty selection part and this is included to indicate that nothing happens if no speech data request is received.

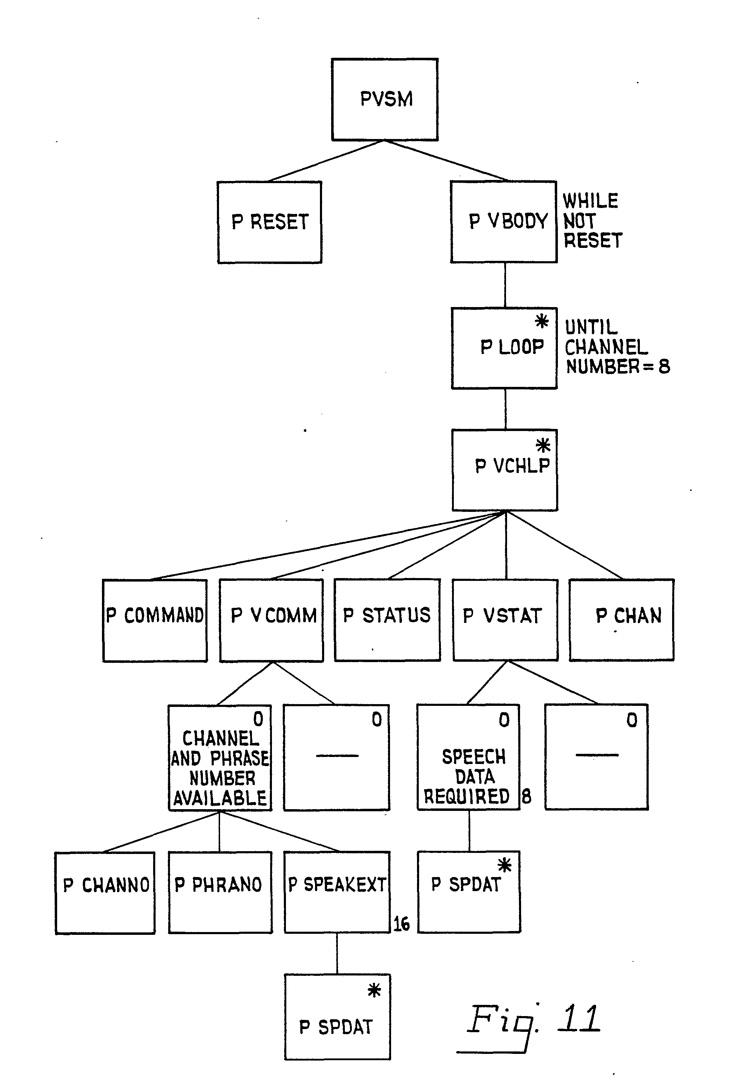

The data structures shown in Figures 10a, 10b and 10c can now be used to develop the program structure. Figure 11 shows the basic program structure.

Referring to Figure 11, P.VSM denotes the program as a whole and is made up of the sequential elements, P.RESET and P.VBODY. P.RESET is the reset routine for the VSM and will be dealt with later. P.VBODY is the main body of the VSM firmware and executes repetitively until a hardware or software reset occurs. P.LOOP marks the beginning of the VSM scanning routine and this iteration occurs eight times for each pass through P.VBODY. The iterated part of P.LOOP is P.VCHLP which is a sequence of five major routines; P.COMMAND, P.VCOMM, P.STATUS, P.VSTAT and P.CHAN.

P.COMMAND is the routine which checks for availability of channel number and phrase number. If these are available P.VCOMM is performed and the channel number and phrase number are read into the CPU. P.VCOMM also generates the Speak External command and writes 16 bytes of speech data to the relevant VSP.

P. STATUS checks for a request from the scanned VSP for more speech data. If speech data has been requested P.VSTAT is performed which writes 8 bytes of speech data to the VSP.

P.CHAN marks the end of the VSM scanning routine. The channel number is incremented and P.LOOP then repeats, this time accessing the next channel. When P.LOOP has executed eight times, the channel number is reset to 0.

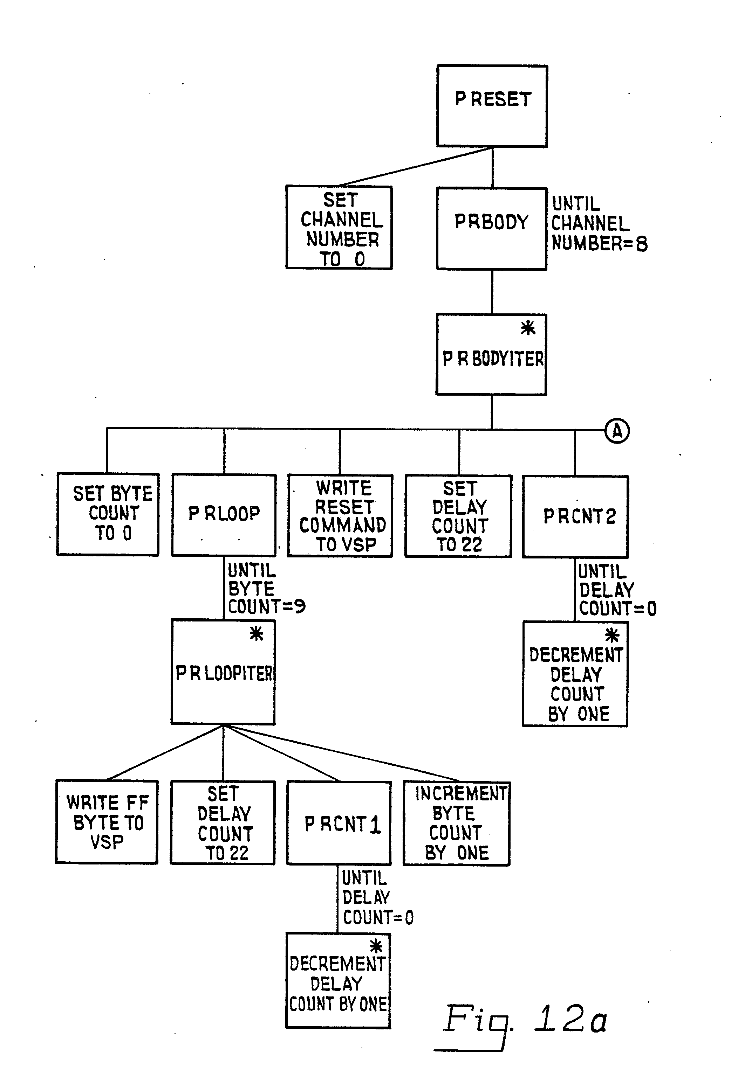

The basic program structure can now be expanded to take into account the operations performed by the CPU. The reset function, P.RESET can be expanded into the program structure shown in Figure 12.

The VSP channel number is first set to 0. This is used to address the relevant voice synthesis processor during the reset routine. P.RBODY is then performed until all eight voice synthesis processor channels have been reset. P.RBODY is an iteration with iterated part P.RBODYITER which is performed if the channel number is less than eight.

BYTE COUNT is set to 0 and this count is used to determine the number of iterations of P.RLOOP and hence the number of bytes written to the voice synthesis processor selected by the channel number. P.RLOOP is performed if BYTE COUNT is not equal to 9. One byte of all 1's is written to the voice synthesis processor for each pass through P.RLOOP. These 9 bytes are used to fill up the voice synthesis processor buffer and set it speaking if it has powered up in Speak External mode. After each byte is written to the voice synthesis processor, a delay of 299$\mu$s occurs, determined by the number of passes through P.RCNT1. The reason for this delay is that if the voice synthesis processor has powered up in a clear condition, each FF (all 1's) byte is recognised by the voice synthesis processor as a reset command and no further command can be sent until the reset command has been executed by the voice synthesis processor. This requires a delay of 300$\mu$s. As other instructions are executed in the firmware code before the CPU attempts to write to the voice synthesis processor again, a firmware delay of 299$\mu$s is more than adequate for this purpose. BYTE COUNT is then incremented by one and P.RLOOP re-iterates.

When all nine FF bytes have been sent, a reset command is written to the voice synthesis processor. The voice synthesis processor recognises this as a reset command either because it has recognised each FF byte as a reset command and sees the reset command itself as simply one more, or because the FF bytes were recognised as data and, when the voice synthesis processor began speaking after the ninth FF byte was written to it, the first FF byte was recognised as a stop code. In the 299$\mu$s delay after the ninth FF byte, the voice synthesis processor has time to stop speaking and ready itself for a command input. After the reset command there is a further 299$\mu$s delay to allow the voice synthesis processor to perform its reset routine.

After this delay, a Read Status command is written to the voice synthesis processor which causes the voice synthesis processor to put its status byte on its outputs. The CPU reads the status byte and checks to see if the voice synthesis processor has been correctly reset. A 13$\mu$s delay occurs after the status byte has been read to allow the voice synthesis processor to stop driving its outputs.

If the voice synthesis processor has been correctly reset, the channel number is incremented and the next iteration of P.RBODY begins. If the voice synthesis processor has not been reset correctly, the reset routine is repeated again for that channel.

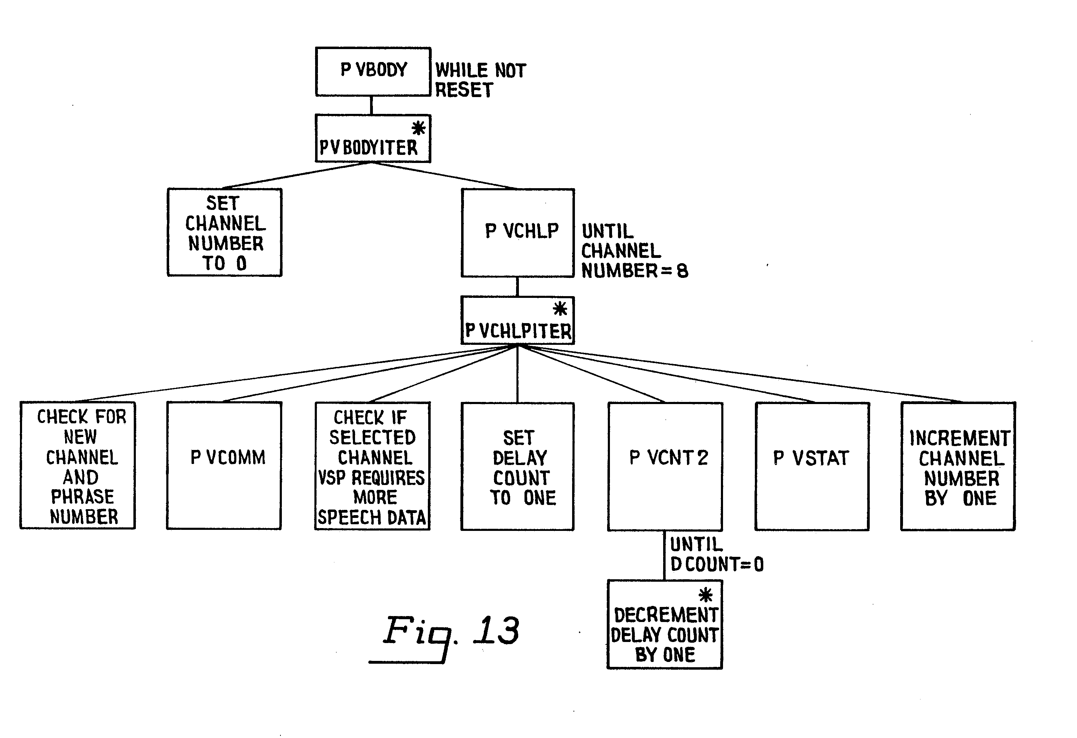

P.VBODY marks the beginning of the main body of the VSM firmware. The program structure for this is shown in Figure 13. Execution of P.VBODY begins immediately after P.RESET and continues until there is a hardware or software reset.

The channel number is first set to zero and P.VCHLP begins its execution. P.VCHLP is an iteration with iterated part P.VCHLPITER and will repeat until the channel number reaches 8. P.VBODY then re-iterates, setting the channel number to zero and re-executing another 8 loops of P.VCHLP.

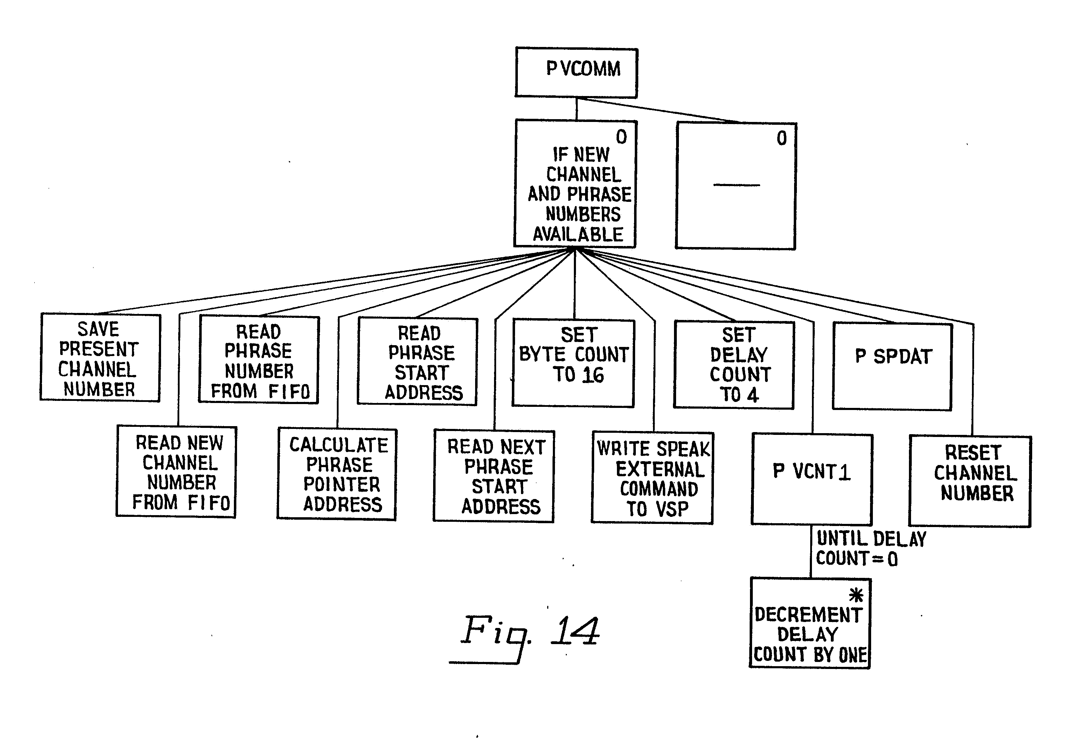

A check is made to see if channel and phrase numbers to begin a new phrase are available. If this is the case, P.VCOMM is executed. The program structure for this section is shown in Figure 14 for clarity.

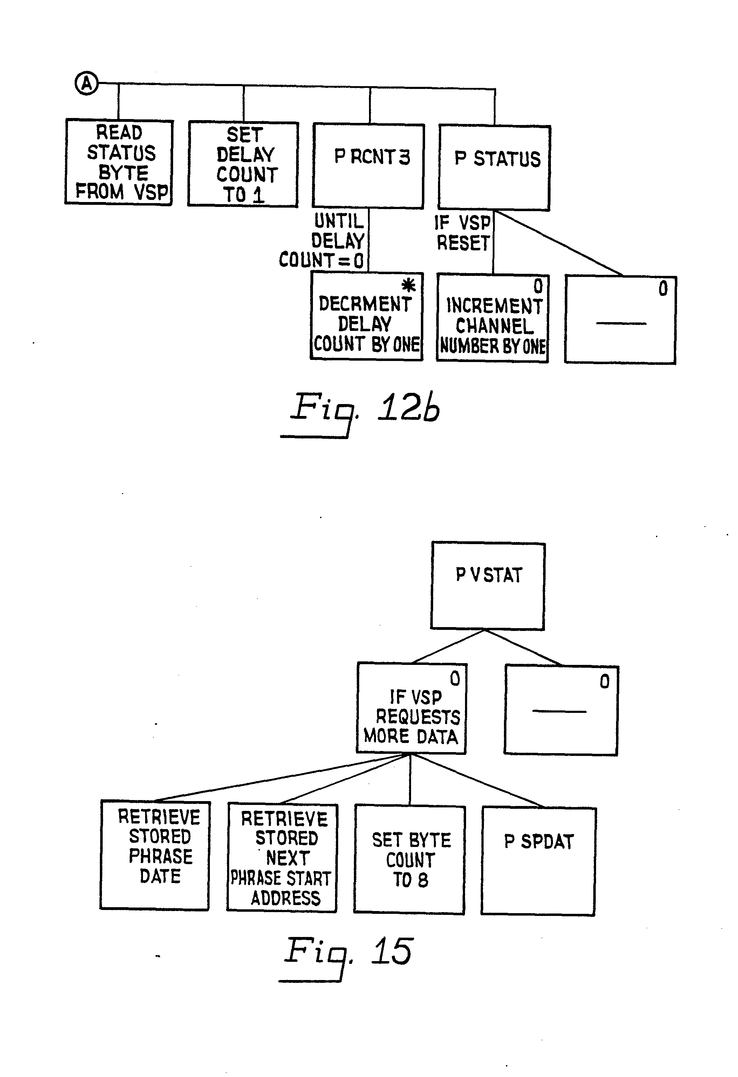

After the decision has been made as to whether to execute P.VCOMM and P.VCOMM has been executed as required, a check is made on the voice synthesis processor being selected by the channel number, to see if phrase data is required by it. This is done by reading the status byte of the relevant voice synthesis processor. A 13µs delay occurs after this read to allow the voice synthesis processor to stop driving its outputs. If the voice synthesis processor has requested phrase data, P.VSTAT is executed. The program structure for P.VSTAT is shown in Figure 15.

After P.VSTAT has been executed as required, the channel number is incremented and P.VCHLP is re-iterated.

P.VCOMM is the program section which starts a particular voice synthesis processor speaking and is performed only if new channel and phrase numbers are available. The CPU, in this case, determines this by checking its CRU input, the input to which is simply the gating together of the data available flags from the channel and phrase FIFO's.

The present channel number is first saved to enable the scanning routine to be continued at the point at which it was left. The CPU achieves this simply by changing the workspace pointer and using the second workspace as a register store during phrase data write operations. The new channel number is then read from the channel FIFO and the phrase number from the phrase FIFO.

The phrase number is operated on as described earlier to generate a phrase pointer address. This provides an address from which the start address for the phrase to be spoken can be read. The CPU reads in this address and stores it in a register. It is this address which will later be incremented and used to extract phrase data from an EPROM. The start address of the next phrase after the phrase to be spoken is also read into the CPU and it is this address which acts as a stop check for the CPU.

BYTE COUNT is set to 16 and a SPEAK EXTERNAL command is written to the VSP. A delay of 26µs then occurs to allow the voice synthesis processor to accept and interpret the command and to make itself ready to receive phrase data.

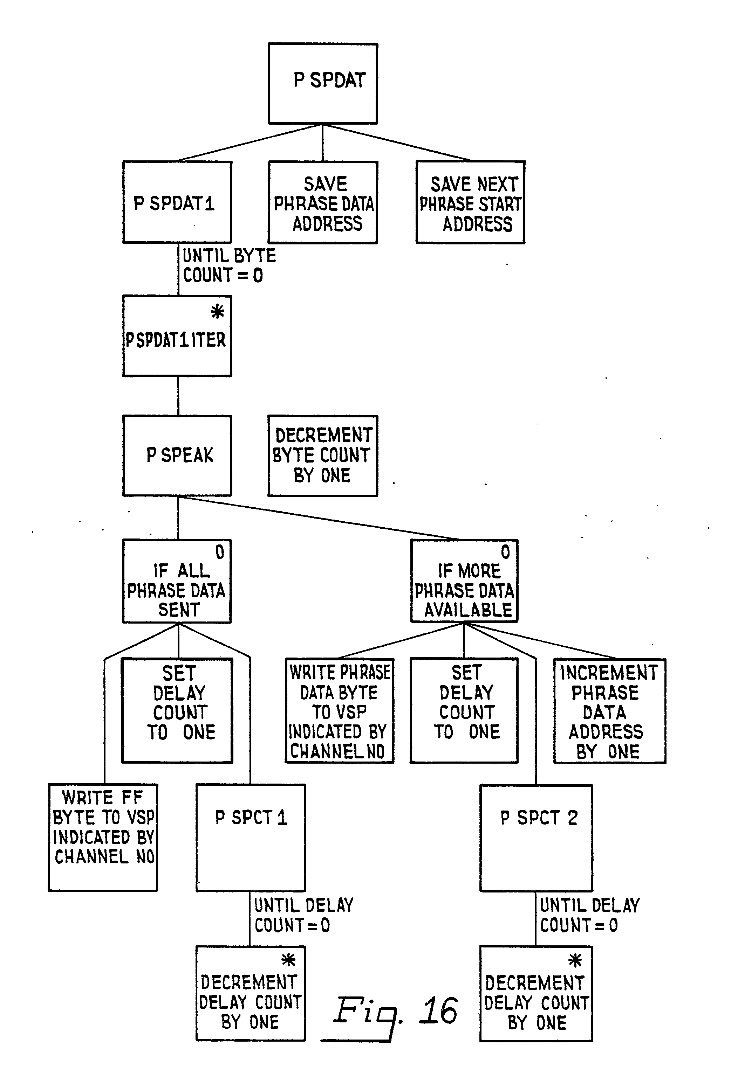

The program section labelled P.SPDAT is the routine used to write a number of phrase data bytes to the voice synthesis processor, the number written being determined by the value of BYTE COUNT. P.SPDAT is the only subroutine used in the firmware. The program structure is shown in Figure 16.

After P.SPDAT has been performed, the channel number is reset to its scanning value by restoring the workspace pointer and the scanning routine continues.

P.SPDAT performs the transferral of phrase data to the selected voice synthesis processor. The number of bytes transferred depends on the initial value of BYTE COUNT. P.SPDAT1 will execute until BYTE COUNT is decremented to zero.

P.SPEAK is a selection with two selection parts. Either all phrase data has been written to the voice synthesis processor or there is still more phrase data to be transmitted, there are no other cases.

If all phrase data has been transmitted, this occurs when the phrase data address becomes equal to the start address of the next phrase, FF bytes are written to the voice synthesis processor until the total number of bytes transmitted equals the initial value of BYTE COUNT. If there is still phrase data available, the next phrase data byte is transmitted to the voice synthesis processor. The phrase data address is then incremented by one and that completes one pass through P.SPEAK.

BYTE COUNT is decremented by one and if not equal to zero a further iteration of P.SPDAT1 commences. If BYTE COUNT is equal to zero then the correct number of bytes have been transferred to the voice synthesis processor. The present phrase data address and the start address for the phrase following the phrase being spoken are stored in order to be able to send data from the correct location when the voice synthesis processor next requests phrase data. These addresses are stored in random access memory.

P.VSTAT is the program section which sends eight bytes of phrase data to a voice synthesis processor when the voice synthesis processor requires it. If the voice synthesis processor status byte indicates that the FIFO is less than half full then the CPU sends 8 bytes of data to the voice synthesis processor.

The phrase data address and the start address of the next phrase are retrieved from their storage locations in a RAM. The CPU stores these in registers in the second workspace and then sets the workspace pointer to the first location in the second workspace. This allows the firmware 16 workspace registers to operate on without in any way affecting those registers used in the scanning function.

BYTE COUNT is then set to 8 and P.SPDAT is executed. Once P.SPDAT has executed completely the workspace is reset to the first workspace. This is done by simply changing the workspace pointer to the first location in the first workspace.

The pseudocode is developed from the program and is shown below.


VSM PSEUDOCODE

```
P.VSM seq

    P.RESET seq

        Set channel number to zero

        P.RBODY iter until channel number = 8

            P.RBODYITER seq

                Set byte count to 0

                P.RLOOP iter until byte count = 9

                    Write 'FF' byte to VSP

                    Set delay count to 22

                    P.RCNT1 iter until delay count = 0

                        delay count = delay count -1

                    P.RCNT1 end

                    byte count = byte count +1

                P.RLOOP end

                Write reset command to VSP

                Set delay count to 22

                P.RCNT2 iter until delay count = 0

                    delay count = delay count -1

                P.RCNT2 end

                Read status byte from VSP

                Set delay count to 1

                P.RCNT3 iter until delay count = 0

                    delay count = delay count -1

                P.RCNT3 end

                P.STATUS sel VSP correctly reset

                    channel number = channel number +1

                P.STATUS end
```

```
                    P.RBODYITER end

            P.RBODY end

          P.RESET end

      P.VBODY iter while not reset

          P.VBODYITER seq

              Set channel number to zero

              P.VCHLP iter until channel number = 8

                    P.VCHLPITER seq

                        Read channel and phrase FIFO flag

                        P.VCOMM sel new channel and phrase

                          numbers available

                            Save present channel number

                            Read channel number from

                               channel FIFO

                            Read phrase number from phrase

                               FIFO

                            Phrase pointer address =

                               phrase number x2 + BEOOH

                            Read phrase start address

                               (Phrase data address)

                            Read next phrase start address

                            Set byte count to 16

                            Write speak external command

                               to VSP

                            Set delay count to 4

                            P.VCNT1 iter until delay count

                               = 0
```

```
                         delay count = delay count -1

                   P.VCNT1 end

                   P.SPDAT1 seq

                         CALL SUBROUTINE P.SPDAT

                   P.SPDAT1 end

                   Restore channel number

              P.VCOMM end

         Read status byte from VSP

         Set delay count to 1

         P.VCNT2 iter until delay count = 0

                   delay count = delay count -1

         P.VCNT2 end

         P.VSTAT sel VSP requires more data

                   Retrieve stored phrase data

                     address

                   Retrieve stored next phrase

                     start address

                   Set byte count to 8

                   P.SPDAT2 seq

                         CALL SUBROUTINE P.SPDAT

                   P.SPDAT2 end

         P.VSTAT end

         channel number = channel number +1

       P.VCHLPITER end

      P.VCHLP end

    P.VBODYITER end

   P.VBODY end

 P.VSM end
```

```
P.SPDAT seq

    P.SPDAT 1 iter until byte count = 0

        P.SPDAT1ITER seq

            P.SPEAK sel no more phrase data available

                Write 'FF' byte to VSP

                Set delay count to 1

                P.SPCT1 iter until delay count = 0

                    delay count = delay count -1

                P.SPCT1 end

            P.SPEAK or more phrase data available

                Write phrase data byte to VSP

                Set delay count to 1

                P.SPCT2 iter until delay count = 0

                    delay count = delay count -1

                P.SPCT2 end

                phrase data address = phrase data

                address +1

            P.SPEAK end

            byte count = byte count -1

        P.SPDAT1ITER end

        P.SPDAT1 end

        Save phrase data address

        Save next phrase start address

    P.SPDAT end
```

The speech data used on the VSM is encoded using a Texas Instruments Portable Speech Lab (PSL), containing speech analysis, speech synthesizer, EPROM programmer and CPU circuit boards. A microphone, loudspeaker and VDU can be connected to it. Any phrase, up to 10 seconds long spoken into the microphone is analysed, encoded using pitch excited LPC into "Linear Prediction" coefficients, stored and synthesized immediately by the user. The user can then change the spoken phrase, either by reentering it via the microphone input or by editing the linear prediction coefficients to improve the quality. The final encoded phrase may then be loaded into EPROM using the EPROM programmer.

There are 12 synthesis parameters and these are stored in coded form in the PSL and later in EPROM. These parameters are pitch, energy and reflection coefficients K1-K10. Each occupies between 3 and 6 bits and select a 10 bit parameter from the voice synthesis processor lookup ROM during synthesis. A total of 50 code bits would be required if all coded parameters were sent for each 25ms frame. However, there are three special cases in which a full frame is not necessary. The advantage of this is that the bit rate can be considerably reduced.

The first special case is a result of the fact that the vocal tract changes shape relatively slowly and it is thus possible to repeat previous reflection coefficients by using a repeat bit. When this bit is set, only energy and pitch data are accessed from the EPROM during synthesis and the previous K1-K10 values are retained.

Secondly, unvoiced speech requires fewer reflection coefficients than voiced. When the pitch parameter is zero, only coefficients K1-K4 are read from EPROM.

Finally when the energy parameter is zero, that is during interword or intersyllable silences, no other data is required.

The combination of these three cases can reduce the average bit rate by 40% for male speech and by a little less for female speech.

The speech quality required for the phrases in the VSM library is not as high as that which can be produced due to the restricted bandwidth of a telephone network. The library is recorded on high quality audio tape in conjunction with the PSL to ensure as clear a recording as possible is made and the recording is made in a soundproof, but not anechoic, chamber. The speech quality produced is adequate for the desired usage, particularly after editing.

One of the major advantages of this method is that the phrase library can be altered or added to very easily using the same speaker, simply by organising another recording session.

When the phrase library has been recorded and edited using the PSL, it must be stored on EPROM. This is easily done by using the PSL EPROM programmer. As the largest EPROM the PSL programmer can program is only 32K bits, it is necessary to dump each phrase into a 32K EPROM, load this into a programmer which can handle larger EPROMS and program the 128K EPROM used on the VSM from this programmer. The phrase address list is added to the 128K EPROM which will reside in VSM memory at location 8000. The phrase address list begins at location BEOO and is programmed by hand.

**Claims**

1. A voice synthesis module, for use in a telecommunications exchange, wherein the module is provided with connection means permitting the module to be connected to the exchange so that the exchange controls the module to activate circuit means in the module to generate a voice response message appropriate to a particular exchange condition to supplement conditions indicating tones used to inform an exchange user of the condition.

2. A voice synthesis module as claimed in claim 1 wherein the module includes a central processing unit, a store containing a speech library and a plurality of speech synthesisers, the central processing unit being arranged so that during its scanning routine, it receives information from the exchange and accesses the store containing the speech library and distributes the accessed data to a particular speech synthesizer which acts upon the data to produce the synthesized voice response message.

3. A voice synthesis module as claimed in claim 2 wherein the speech synthesizers are multiplexed to the store containing the speech library, and are mapped into the memory of the central processing unit, so that the transfer of speech data from the store containing the speech library to a particular multiplexer is controlled by the central processing unit which addresses the particular synthesizer at its mapped memory location.

4. A voice synthesis module is claimed in claim 2 or 3 wherein the voice synthesis module includes logic means for controlling phrase and channel number signals received from the exchange, a phrase store and a channel store for storing the phrase number signals and channel number signals respectively, wherein the module includes synthesizer identifying means responsive to a channel number signal generated by the channel store to identify which voice synthesis processor is to be activated, and responsive to a phrase number signal generated by the phrase number store to index an address in a phrase pointer table which points to the address of the required speech data.

5. A voice synthesis module as claimed in claim 4 wherein the logic means includes an output selector circuit which enables a particular output multiplexer to pass speech data from an associated shift register to an A-law conversion circuit before storing the speech data in a buffer store prior to the speech data being passed on to an exchange system bus.

6. A voice synthesis module as claimed in any preceding claim in which the module is controlled by a computer program wherein the program is designed using a structured programming method, the method involving the creation of data structure diagrams combined into a basic program structure and expanded to include all program operations from which a pseudocode is written.

7. A voice synthesis module as claimed in claim 6 wherein the pseudocode is translated into a program code to allow the voice synthesis module to implement the program.

8. A telecommunications exchange including a voice synthesis module as claimed in any preceding claim.

*Fig. 1*

Fig. 2

0 194 004

| | |
|---|---|
| INTERNAL RAM | FFFF |
| | FFFA |
| NOT USED | F0FC |
| GENERAL USE INTERNAL RAM | F000 |
| NOT USED | |
| STATUS REG | C00C |
| PHRASE FIFO | C00B |
| CHANNEL FIFO | C00A |
| CRU BASE | C009 |
| VSPS | C008 |
| PHRASE ADDRESS POINTER LIST | C000 |
| | BE00 |
| SPEECH LIBRARY | |
| VSM SYSTEM FIRMWARE | 8000 |
| | 0 |

*Fig. 3*

Fig. 4

0 194 004

ROM CLK ⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔⊓⊔

T11 ⊓_____⊓_

I/O ___|LSB| | | | | | | |MSB|_____

SH CLK ___⊓⊔⊓⊔⊓⊔⊓⊔⊓⊔⊓⊔⊓⊔⊓⊔⊓⊔⊓⊔⊓⊔⊓_____

*Fig. 5*

0 194 004

Fig. 6

0 194 004

| BAB | 10 | 11 | 12 | 13 | 14 | 15 | |
|-----|----|----|----|----|----|----|---|
| | 1 | 1 | 1 | 1 | 1 | 0 | UP |
| | 1 | 1 | 1 | 1 | 1 | 1 | DOWN |
| | 0 | X | Y | Y | Y | 0 | RECEIVE CHANNEL AND PHRASE NUMBER |
| | 0 | 0 | Y | Y | Y | 1 | TRANSMIT STATUS BYTE |
| | 0 | 1 | Y | Y | Y | 1 | TRANSMIT SPEECH DATA |

X — IRRELEVANT
YYY — CHANNEL NUMBER

## Fig. 7

## Fig. 9

Fig. 8

0 194 004

Fig. 10a

Fig. 10b

Fig. 10c

Fig. 11

Fig. 12a

```
┌─────────────────┐ WHILE NOT
│    P VBODY      │ RESET
└────────┬────────┘
         │
┌────────┴────────┐ *
│   PV BODYITER   │
└─────────────────┘
```

| | |
|---|---|
| SET CHANNEL NUMBER TO 0 | P VCHLP — UNTIL CHANNEL NUMBER = 8 |

```
┌─────────────────┐ *
│   P VCHLPITER   │
└─────────────────┘
```

| CHECK FOR NEW CHANNEL AND PHRASE NUMBER | P VCOMM | CHECK IF SELECTED CHANNEL VSP REQUIRES MORE SPEECH DATA | SET DELAY COUNT TO ONE | P VCNT 2 | P VSTAT | INCREMENT CHANNEL NUMBER BY ONE |

UNTIL D COUNT = 0

DECREMENT DELAY COUNT BY ONE *

Fig. 13

Fig. 14

0 194 004

Ⓐ

| READ STATUS BYTE FROM VSP | SET DELAY COUNT TO 1 | P RCNT 3 | P STATUS |
|---|---|---|---|

UNTIL DELAY COUNT = 0

IF VSP RESET

| DECRMENT DELAY COUNT BY ONE * | INCREMENT CHANNEL NUMBER BY ONE 0 | ——— 0 |
|---|---|---|

*Fig. 12b*

| P V STAT |
|---|

| IF VSP REQUESTS MORE DATA 0 | ——— 0 |
|---|---|

| RETRIEVE STORED PHRASE DATE | RETRIEVE STORED NEXT PHRASE START ADDRESS | SET BYTE COUNT TO 8 | P SPDAT |
|---|---|---|---|

*Fig. 15*

```
                    ┌──────────┐
                    │  P SPDAT │
                    └──────────┘
         ┌──────────────┼──────────────┐
   ┌──────────┐   ┌──────────┐   ┌──────────┐
   │ P SPDAT1 │   │  SAVE    │   │SAVE NEXT │
   │          │   │PHRASE DATA│  │PHRASE START│
   └──────────┘   │ADDRESS   │   │ADDRESS   │
        │         └──────────┘   └──────────┘
   UNTIL BYTE
   COUNT = 0
   ┌──────────┐ *
   │PSPDAT1ITER│
   └──────────┘
        │
   ┌──────────┐   ┌──────────┐
   │ P SPEAK  │   │DECREMENT │
   │          │   │BYTE COUNT│
   └──────────┘   │BY ONE    │
        │         └──────────┘
```

```
   ┌──────────┐ 0          ┌──────────┐ 0
   │ IF ALL   │            │ IF MORE  │
   │PHRASE DATA│           │PHRASE DATA│
   │ SENT     │            │AVAILABLE │
   └──────────┘            └──────────┘
```

```
        ┌──────────┐   ┌──────────┐  ┌──────────┐  ┌──────────┐
        │   SET    │   │WRITE PHRASE│ │   SET    │  │INCREMENT │
        │  DELAY   │   │DATA BYTE  │ │  DELAY   │  │ PHRASE   │
        │  COUNT   │   │  TO VSP   │ │  COUNT   │  │  DATA    │
        │  TO ONE  │   │INDICATED BY│ │  TO ONE  │  │ ADDRESS  │
        └──────────┘   │CHANNEL NO │ └──────────┘  │ BY ONE   │
                       └──────────┘                └──────────┘
```

```
┌──────────┐  ┌──────────┐              ┌──────────┐
│ WRITE FF │  │ P SPCT 1 │              │ P SPCT 2 │
│BYTE TO VSP│  │          │              │          │
│INDICATED BY│ └──────────┘              └──────────┘
│CHANNEL NO│       │                          │
└──────────┘  UNTIL DELAY               UNTIL DELAY
              COUNT = 0                 COUNT = 0
              ┌──────────┐ *            ┌──────────┐ *
              │DECREMENT │              │DECREMENT │
              │DELAY COUNT│              │DELAY COUNT│
              │BY ONE    │              │BY ONE    │
              └──────────┘              └──────────┘
```

*Fig. 16*